# EUROPEAN PATENT APPLICATION

(11) **EP 4 467 685 A1**
(43) Date of publication of application: **27.11.2024**
(21) Application number: 23174619.9
(22) Date of filing: 22.05.2023
(51) Int. Cl.: C25B 1/044, C25B 9/00, C25B 9/015, C25B 9/19, C25B 9/70, C25B 15/08, B25C 1/00

(54) **GAS GENERATOR FOR A TOOL, USAGE OF THE GAS GENERATOR AND A TOOL WITH A GAS GENERATOR**

(71) Applicant: Hilti Aktiengesellschaft, 9494 Schaan (LI)
(72) Inventor: Schmid, Florian, 9470 Buchs SG (CH)
(74) Representative: Hilti Aktiengesellschaft Corporate Intellectual Property

(57) **Abstract**

The invention discloses a gas generator 20 for a tool comprising an electrolytic cell 30 for producing oxyhydrogen gas with a hollow cell body 31 and an electrode pair 32 with a first electrode 33 and a second electrode 35. Said first electrode 33 and said second electrode 35 are separated by a non-conductive separator 37 in said hollow cell body 31. A gas extraction tube 55 is arranged in the hollow cell body 31. Furthermore, said invention disclose a usage of such a gas generator in a tool and a tool with such a gas generator.

## Description

The present invention relates to gas generator according to claim 1, a usage of said gas generator in a tool according to claim 13, and a tool with said gas generator according to claim 14.

### Technical field of the Invention

Various embodiments of the present invention concern a gas generator for a tool. Typical, said tool is a handheld one, specifically a handheld nail setting tool. The usual energy sources for handheld tools include an electric power cord, a battery, a gas can, a powder cartridge, or air pressure. At a construction site, a portable tool can be used in a variety of ways, frequently overhead of the user, and after usage, it is simply placed away by the user. As a result, during use, said portable tool rapidly and frequently alters its spatial orientation.

### Background of the Invention

For stationary uses like welders and flame polishers, gas generators are well recognized. Hydrogen and oxygen gas bubbles are produced during the electrolysis of water, and these bubbles must be separated from the aqueous electrolyte. In stationary applications, gas and liquid are typically separated by gravity; that is, bubbles rise to the liquid's surface and gas is collected above the liquid surface. However, this method is impractical for hand-held instruments since gravity direction can no longer be taken for granted.

RU 2 475 343 C1 disclosing an electrolytic cell. The electrolytic cell consists of flat or shaped parallel electrodes with holes of slots making gas and electrolyte passages. The space between electrodes is filled with an electrolyte, while electric current is supplied externally. Said electrodes are interconnected by current conducting buses to make sets. The central electrodes of every said set with 2n+1 electrodes are located between two adjacent sets, while other 2n electrodes of this set are arranged at the centre of the gap between electrodes of adjacent sets with contact with said buses. Thus, a compact electrolytic cell is provided.

US 4,081,656 A discloses a welding apparatus comprising an electrolytic cell for generating hydrogen and oxygen for industrial applications, being used to perform different types of welding operations based on the utilisation of hydrogen and oxygen. The electrolytic cell contains two plate electrodes immersed in an electrolyte consisting of a solution of KOH in water and connectable through terminals respectively to a source of AC or DC electricity. The source of electricity is a transformer connected to the cell through a bridge rectifier. A flash-back arrestor is constituted by a water bath in which gas liberated in the electrolytic cell passes through a tube into the water bath and thence through a tube to the burner.

A disadvantage of these disclosures is, that they are consociated for welding processes and industrial applications and are not suitable for a tool, especially not for a handheld tool.

WO 2005/023709 A2 discloses a power-driven tool, utilizing hydrogen from a tank, which was filled by a stationary gas generator comprising an electrolytic cell. The gas generator includes a base housing in which a switch that controls the flow of line voltage to the voltage rectifier and a microprocessor are located. The voltage rectifier supplies DC voltage to the anode and cathode located in the containment vessel fitted into the base housing. The cylindrical chamber in the containment vessel is divided into generally semi-cylindrical chambers by a non-permeable divider that allows the liquid to flow freely in the bottom portion of the containment vessel for the free flow of electrons between the anode and the cathode. This non-permeable divider prevents gas migration once separation has occurred. Located in the chamber is the cathode which, when activated, generates hydrogen from the water in the chamber. When sufficient hydrogen gas is produced by the cathode the liquid level in chamber will be reduced and the liquid level indicator will send a signal to the microprocessor to activate the compressor. The hydrogen gas from the low-pressure hose is compressed in the compressor and hydrogen gas under a high-pressure flows from the compressor into the top of a tank. The tank filled with hydrogen gas under pressure can be removed from the gas generator and used as a source of fuel for any number of mechanisms, including the lawnmower, nail setters, and portable power tool system for operating saws, drills.

A disadvantage of the disclosure is, that the stationary gas generator is a heavy and clunky stand-alone hydrogen generator with a complex setup, which fills a tank with compressed hydrogen.

US 7,168, 603 B1 discloses a power-driven tool, utilizing hydrogen gas from gas generator for driving a moveable tooling. Said gas generator is arranged in the tool housing and comprises an electrolytic cell, whereby said electrolytic cell comprises at least one electrode pair disposed in an aqueous electrolyte solution. A disadvantage of the disclosure is, that said electrolyte can flow out of the gas generator when the tool orientation is inverted.

Another embodiment of the gas generator in US 7,168, 603 B1 uses a chemical reaction of an aqueous solution of sodium borohydride to produce hydrogen gas. Said gas generator comprises a hydrophobic membrane at the gas outlet. Said hydrophobic membrane exploits the negative bubble-point pressure of a porous hydrophobic structure for liquid separation. A disadvantage of the disclosure is, that the liquid separation only works reliably, when the membrane is only partially covered with liquid. If the membrane is completely covered with liquid and the differential pressure is large enough, then the liquid separation fails, and liquid penetrates through the hydrophobic membrane. This could happen if, for example, the tool orientation is inverted. The liquid separation can also fail if the tool is subject to high accelerations, which happens regularly during operation of nail setting tools.

### Summary of the Invention

An object of the present invention is to overcome at least one of the disadvantages of the prior art. It is further an object of the present invention to provide a gas generator for a tool, especially a handheld tool, comprising an electrolytic cell, which constantly operates independent on its spatial orientation.

At least one of these objects has been solved by the features of the independent patent claims. Other preferred embodiments are indicated in the dependent claims.

In particular, according to a first aspect of the present disclosure, the object is achieved by a gas generator for a tool comprising an electrolytic cell with a hollow cell body, a first electrode and a second electrode. Said first electrode and said second electrode are separated by at least one electrically non-conductive separator in said hollow cell body and a gas extraction tube is arranged in the hollow cell body. The aforementioned gas extraction tube is used to extract the operation gas from the hollow cell body while also preventing the electrolyte from leaking out of the cell body. The constant operation of such a gas generator, independent of its spatial orientation, makes it particularly appropriate for a tool, especially for a handheld tool. Without losing the electrolyte, a tool in use can change its spatial orientation permanently. Because of its advantageous design, the gas generator does not lack any liquid electrolyte.

Preferably said operation gas is a mixture of oxygen and hydrogen gas, called oxyhydrogen gas, produced in said electrolytic cell. Oxyhydrogen gas is produced in said electrolytic cell, when the first electrode and the second electrode are electrically supplied by an electric supplier, like a battery. A DC-DC converter may be used for load regulation in said electrolytic cell. Advantageously said electric supply is a current supply providing a desirable current for operating said at least one electrolytic cell.

Preferably said gas generator comprises a pressure vessel. Said gas generator allows to produce pressurized operation gas because the operation gas is compressed by means of electrolysis. This is advantageous for buffering gas for intermittent demand. Additionally, this is advantageous for higher power density and efficiency in the combustion engine, where the gas is consumed. The voltage increases for internal compression in said electrolytic cell is max. 3-4% for 25 bar, 4-5% for 50 bar and 4-6% for 100 bar operation gas pressure. Alternatively, or additionally, a polymer electrolyte membrane (PEM) is used in said electrolytic cell to produce hydrogen and oxygen. The PEM may be introduced to overcome partial load issues, low current density, in the electrolytic cell.

In an advantageous embodiment said hollow cell body is at least partially filled with an electrolyte, such as that the electrolyte does not flow into the gas extraction tube, independent of the orientation of the gas generator. Said hollow cell body covers said first electrode, said non-conductive separator and said second electrode entirely. Said electrolyte is preferably a liquid electrolyte, like e.g. water or other alkaline liquids or water-based liquids, and may comprise at least an additive e.g., KOH (potassium hydroxide) or NaOH (sodium hydroxide). Such a liquid electrolyte is inexpensive and provides a wide operating temperature range of -60 °C to 110 °C, especially in a 30 weight% KOH solution with water. Here the mass fraction between said additive and said electrolyte is relevant, e.g., 1 kg electrolyte with 30 weight% demands 0.3 kg KOH and 0.7 kg water.

KOH is added preferably between 15 to 45 weight% to the electrolyte in the electrolytic cell, and alternatively NaOH is added preferably between 10 to 25 weight% to the electrolyte in the electrolytic cell. At these concentrations, the freezing point of the electrolyte is below - 10 °C. To improve water separation, a suitable defoamer can be added to the electrolyte.

Preferably said electrodes of said electrode pair are made of stainless steel. Thus, increased electrolysis efficiencies, larger than 60%, are achieved. Furthermore, said electrodes may comprise a metal sheet, a metal wire mesh, e.g., a plain weave or a metal fibre fleece. A practical and economical electrode is a mesh made of metal wire. For example, stainless steel or nickel alloy sheet or wire mesh would be useful.

In another embodiment said gas extraction tube is connected to an opening of said hollow cell body. Without any leakages, said gas extraction tube transports the operation gas from the hollow cell body to a tool's combustion chamber.

Preferably said gas extraction tube is connected to an opening of one of a first electrode contact or of a second electrode contact. The operation gas is collected and compressed in the hollow cell body and exhausted from the gas extraction tube through said opening of the first electrode contact or the second electrode contact. Said electrode contacts electrically contact respectively the first electrodes and the second electrode with an electric supplier, like said battery. Said electrode contacts make electrical connections with an electric supplier, such as said battery, to the first and second electrodes, respectively. The first electrode thus serves as an anode, and the second electrode serves as a cathode. A single electrolytic cell should ideally operate at a voltage between 2 and 2.5 V.

Further preferably said gas extraction tube extends through at least one of mentioned openings. Thus, said gas extraction tube is easily connected to a gas dosing valve or a combustion chamber.

This hollow cell body includes a gas storage volume that serves as a pressure buffer for the gas dosing valve's intermittent gas demand. It also functions as a low-cost, portable, and small energy storage device for operations like the burst setting of a nail setting tool. The gas storage volume may also include the portion of the gas generator that is not entirely filled with the electrolyte in question.

In an advantageous embodiment said hollow body comprises a length in at least one dimension and said gas extraction tube extends at least between one third and two thirds of the length of the hollow cell body. Thus, the amount of electrolyte in the electrolytic cell is optimizable, and no leakage of the electrolyte during operation occurs.

Preferably said gas extraction tube extends less than 60 percent of the length of the hollow cell body in said void. Thus, the operation gas is effectively transported out of said void and preventing any electrolyte leakage out of the gas generator. Preferably said gas extraction tube extends at least 40 percent of the length of the hollow cell body in said void. Thus, the operation gas is ideally transported out of said void and preventing any electrolyte leakage out of the gas generator.

In an advantageous embodiment said first electrode and said second electrode are wound up to form a reel inside the hollow cell body. The reel structure allows a large electrolytic area in a compact volume of said hollow cell body. The electrodes on the flat faces of the reel are respectively connected to the first electrode contact and the second electrode contact for electrical supplying the first electrode and the second electrode. Said first electrode and said second electrode are separated by a first non-conductive separator and a second non-conductive separator, which are wound up with the electrode pair. The electrodes may be axially displaced relative to the non-conductive separators, so that the electrodes respectively can be contacted at with the electrode contacts. Advantageous is the simple fabrication of the cell.

Preferably said first electrode and said second electrode are arranged in the hollow cell body in such a way that they form a void in the centre of the hollow cell body. Said first electrode and second electrode are permeable for the operation gas. This electrode-separator structure allows the operation gas to flow in radial direction towards the void to the centre of the electrolytic cell. Furthermore, said operation gas may flow advantageously in axial direction to the ends of the electrolytic cell and towards the void to the centre of the electrolytic cell.

In another advantageous embodiment said first electrode and said second electrode comprise a disc-shaped structure and form a stack in the hollow cell body, where said disc-shaped structure comprises a void in the centre of its structure. Said first electrode and said second electrode are separated by the non-conductive separator. Said first electrode and said second electrode are arranged on an individual disc. Several individual disks are stacked on top of each other, with a non-conductive separator sandwiched between adjacent discs in each case. This electrode-separator structure allows the operation gas to flow radial direction to the void in the centre of the electrolytic cell.

For example, a series connection of many flat, disc-shaped cells is used. For this purpose, unperforated bipolar plates and separator membrane blanks are stacked alternately. A bipolar plate serves as a first electrode (anode) for one cell and as a second electrode (cathode) for the neighbouring cell. An advantage is the low cell current for a given gas generation rate due to the large number of cells.

Alternatively said first electrode and said second electrode comprise a circular involute structure in the hollow cell body, where said circular involute structure comprises a void in the centre of its structure. Said first electrode and said second electrode are connected in parallel and are separated by said non-conductive separators. Said non-conductive separators are non-permeable for the operation gas. Alternatively, at least one of said first electrode or second electrode is non-permeable for the operation gas. Said operation gas is led to the void along the circular involute structure of the electrodes. Since the oxygen gas cannot react with the cathode during gas transport in the electrolytic cell, this structure results in a high efficiency in the electrolytic cell. Typically, the process of gas production in an electrolytic cell generates heat. Improved heat dissipation occurs in the electrolytic cell when the electrodes are designed with a circular involute structure.

Preferably said circular involute structure comprises several sheets and said several sheets are divided into first electrodes and second electrodes, while said first electrodes are used as anodes and said second electrodes are used as cathodes. All first electrodes may be connected in parallel, and all second electrodes may be connected in parallel.

For example, an electrolytic cell consisting of many electrodes connected in parallel and bent in the shape of a circular involute with a separator in between. The electrodes are each displaced in the axial direction so that the electrodes can be easily contacted with said electrode contact. This cell has the advantage of good radial thermal conductivity. In addition, the operation gas produced can flow along the electrodes in a radial direction into void in the centre of the electrolytic cell and the electrolyte can be drawn in from the hollow cell body wall. No counterflow occurs and electrolyte entrained with the gas flow additionally cools the electrolytic cell convectively.

In an advantageous embodiment said gas extraction tube extends in the void of said reel or said structures. The gas extraction tube is primarily exposed in the void because it is only connected to one contact of the electrodes and does not contact any other portion of the electrolytic cell. The operating gas is gathered in the void and only the gas extraction tube allows it to leave the electrolytic cell.

In an advantageous embodiment said non-conductive separator comprises a porous material, in particular a mesh, fabrics or nonwoven made of e.g., polypropylene (PP), polyphenylene sulfide (PPS) or polyetheretherketone (PEEK), which are treated to have a hydrophilic behaviour. The porous separator absorbs and distributes the electrolyte in the electrolytic cell by means of capillary action. Preferably said porous material is chemical resistant to concentrated additives, like KOH or NaOH. Alternatively, membranes made of polyethersulfone (PES), and composite membranes, for example membranes based on polyethersulfone (PES) with inorganic fillers such as zirconium dioxide, aluminum oxide, titanium dioxide or barium sulfate may be used as non-conductive porous separator. Thus, the efficiency of the oxyhydrogen production in the electrolytic cell is stable. Oxygen gas at the cathode (hydrogen production) can lead to parasitic side reactions, so a certain gas tightness of the wetted separator membrane (bubble point test) is advantageous. This is preferably achieved by a good wettability as well as a maximum pore size of the separator membrane. Furthermore, a wicking effect of the separator membrane is advantageous to achieve a uniform distribution of the electrolyte in the cell.

In an advantageous embodiment at least a second electrolytic cell, with an electrode pair consist of a first electrode and a second electrode is arranged in said hollow cell body. Thus, the operation gas is generated with a higher efficiency.

Preferably said at least second electrolytic cell is connected in series with said first electrolytic cell. This increases the required electrolysis voltage but also reduces the electrolysis current and thus the ohmic losses in the gas generator. The advantage is that the current can be halved for the same gas production rate and thus the ohmic resistance losses are smaller.

Preferably a bipolar contact plate is placed between the first electrolytic cell and the second electrolytic cell to reduce leakage currents. A plurality of independent, spring-loaded contact points provides a good contact quality. Preferably said bipolar contact plate is unperforated, thus the contribution for the gas production of both electrolytic cells is increased, which increases the efficiency.

In an advantageous embodiment a hydrophobic filter is arranged at the gas extraction tube. The hydrophobic filter ensures that no electrolyte leaves the electrolytic cell if there is a surplus of electrolyte in the gas generator. For example, filters made of sintered or expanded polytetrafluoroethylene (PTFE), polypropylene (PP) or polyethylene (PE) would be advantageous due its high hydrophobic properties.

In an advantageous embodiment said hollow cell body comprises a refill opening for refill an electrolyte into said electrolytic cell. Thus, a permanent operation of the electrolytic cell is possible. Preferably said refill opening is connected to a liquid transport pump for transporting the water or electrolyte from a reservoir to said gas generator.

Preferably said refill opening is arranged at one of the first electrode contact or second electrode contact. Thus, said refill opening is arranged opposite to the inlet section of said gas extraction tube.

In an advantageous embodiment a housing is provided to assimilate said hollow cell body at least partially. Said housing provides a mechanical protection for the electrolytic cell. Said housing may be a pressure vessel. Said pressure vessel needs to withstand the operation gas pressure and more important a pressure from an internal explosion of the oxyhydrogen gas without bursting of the housing. Said housing may comprise an insulation for insulating said housing from said electrode pair. Said insulation comprises a first insulation disc for the first electrode contact and a second insulation disc for the second electrode contact. The hollow cell body in question might have an insulating layer on the inside. Gaskets for securing the electrolytic cell may be included in the housing.

Said housing is preferably arrangeable on a tool for providing an interchangeable gas generator. Thus, said gas generator is replaceable from a tool, e.g., for refilling the electrolyte in the electrolytic cell.

According to a further aspect of the present disclosure, the object is achieved by a usage of a gas generator as disclosed above in a tool, preferably in a handheld tool.

Said gas generator operates constantly independent on its spatial orientation, which makes the gas generator especially suitable for a tool, in particular for a handheld tool.

According to a further aspect of the present disclosure, the object is achieved by tool comprising an above-mentioned gas generator. A tool comprising the above-mentioned gas generator operates constantly independent on its spatial orientation.

By means of the following figures, the invention is explained in more detail by means of examples of embodiments. The list of references is part of the disclosure.

Positional indications, such as "above", "below", "right" or "left" are in each case related to the corresponding embodiments and are not to be understood as restrictive.

Indications, such as "first", "second", or "further" are in each case related to the corresponding device and are not to be understood as restrictive or enumeration.

### Brief Description of the Drawings

In order to facilitate better understanding of the present invention, reference is made below to the drawings. These show only exemplary embodiments of the subject matter of the invention. These embodiments, offered not to limit but only to exemplify and teach the invention, are shown and described in sufficient detail to enable those skilled in the art to implement or practice the invention. Thus, where appropriate to avoid obscuring the invention, the description may omit certain information known to those of skill in the art.

In the figures and the associated description, identical or functionally analogous parts are provided with the same reference numerals.

The invention also encompasses individual features shown in the figures, even if they are shown there in connection with other features and/or are not mentioned above. Further, the term "comprising" and derivatives thereof do not exclude other elements or steps. Likewise, the indefinite article "a" or "one" and derivatives thereof do not exclude a plurality. The functions of multiple features recited in the claims may be performed by a single unit. The terms "substantially", "approximately", "about" and the like in connection with a characteristic or a value define, in particular, also exactly the characteristic or exactly the value. All reference signs in the claims are not to be understood as limiting the scope of the claims.
Fig. 1 shows a first embodiment of the inventive gas generator in a schematic view,
Fig. 2 shows said gas generator according to Fig. 1 in a perspective view,
Fig. 3 shows a second embodiment of the inventive gas generator in a perspective view,
Fig. 4 shows a third embodiment of the inventive gas generator in a perspective view,
Fig. 5 shows a further embodiment of the inventive gas generator in a perspective view, and
Fig. 6 shows an inventive tooling comprising one of the gas generators according to the Fig. 1 to Fig. 5 in a simplified view.

### Detailed Description

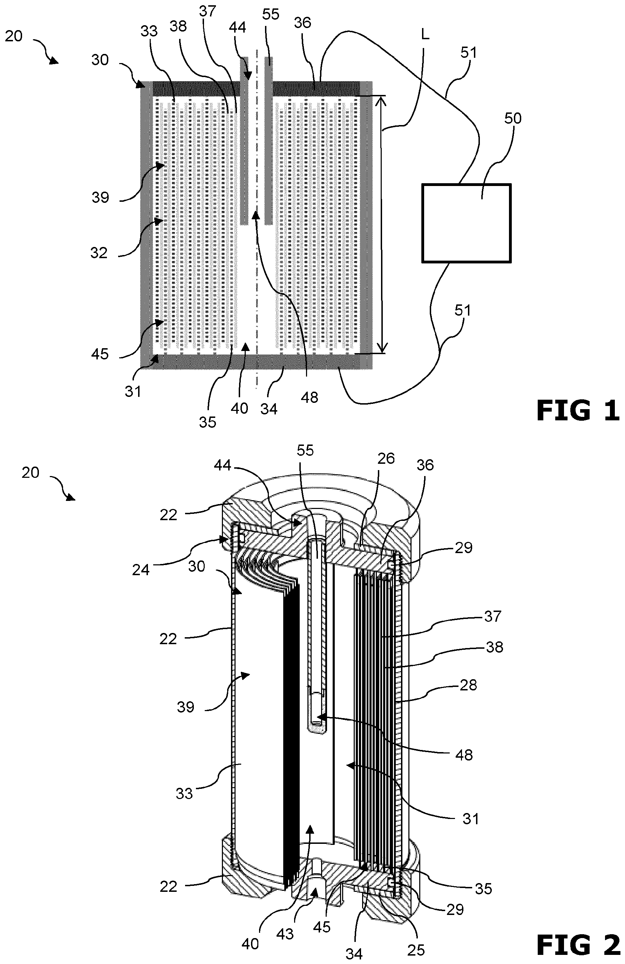

**Figure 1** and **Figure 2** show an inventive gas generator 20 for a tool comprising an electrolytic cell 30 with a hollow cell body 31, an electrode pair 32 with a first electrode 33 and a second electrode 35. Said first electrode 33 and said second electrode 35 are wound up to form a reel 39 inside the hollow cell body 31. Said first electrode 33 and said second electrode 35 are separated by two non-conductive, porous separators 37, 38 in said hollow cell body 31. The electrodes 33, 35 are respectively connected on the flat faces of the reel 39 to the first electrode contact 34 and the second electrode contact 36 for electrical supplying the first electrode 33 and the second electrode 35. Said non-conductive porous separators 37, 38 are wound up with the electrode pair 32. Said first electrode 33 and said second electrode 35 are arranged in the hollow cell body 31 in such a way that they form a void 40 in the centre of the hollow cell body 31.

The electrodes 33, 35 are axially displaced relative to the non-conductive, porous separators 37, 38.

Said electrodes 33, 35 respectively are contacted with the electrode contacts 34, 36. Said electrode contacts 34, 36 are connected to an electric supplier, here a battery 50. When electrically contacted via a wiring 51, said first electrode 33 provides an anode and said second electrode 35 provides a cathode. Said hollow cell body 31 is at least partially filled with water comprising KOH (potassium hydroxide) as an additive, as a liquid electrolyte 45. Said additive stays in said electrolytic cell 30, while said water is refilled occasionally. The electrically contacted electrodes 33, 35 produce oxyhydrogen as an operation gas 48 by electrolysis, which moves in the direction of the void 40. Said first electrode 33 and second electrode 35 are permeable for the operation gas 48. Said reel 39 allows the operation gas 48 to flow in radial direction and axial direction towards the void 40 to the centre of the electrolytic cell 30. Said first electrode contact 34 comprises a refill opening 43 for refill water into said electrolytic cell 30.

Said electrodes 33, 35 are wire meshes, made of stainless steel. Said non-conductive separators 37, 38 comprise a porous material, namely a wire mesh made of polypropylene (PP). Alternative materials to said electrodes 33, 35 or non-conductive separators 37, 38 are mentioned above.

Said electrolytic cell 30 comprises a gas extraction tube 55, which is arranged in the hollow cell body 31. Said gas extraction tube 55 is connected to an opening 44 of said second electrode contact 36. Said hollow body 31 comprises a length L in at least one dimension and said gas extraction tube 55 extends at least less then to the half of the length L of the hollow cell body 31. Said gas extraction tube 55 extends in the void 40 of said reel 39. Said gas extraction tube 55 is only connected with said second electrode contact 36 and does not contact another part of the electrolytic cell 30, so that the gas extraction tube 55 is mostly exposed in the void 40. The operating gas 48 is collected in the void 40 and exits the electrolytic cell 30 exclusively through the gas extraction tube 55.

Said gas generator 20 comprises a housing 22 to cover said hollow cell body 31. Said housing 22 comprises an insulation 24 for insulating said housing 22 from said electrodes 33, 35. Said insulation 24 comprises a first insulation disc 25 adjacent to the first electrode contact 34 and a second insulation disc 26 adjacent to the second electrode contact 38. Said hollow cell body 31 comprises an insulating layer 28 on the inner side of the hollow cell body 31. Said housing comprises gaskets 29 for sealing the electrolytic cell 30 - see **Figure 2****.**

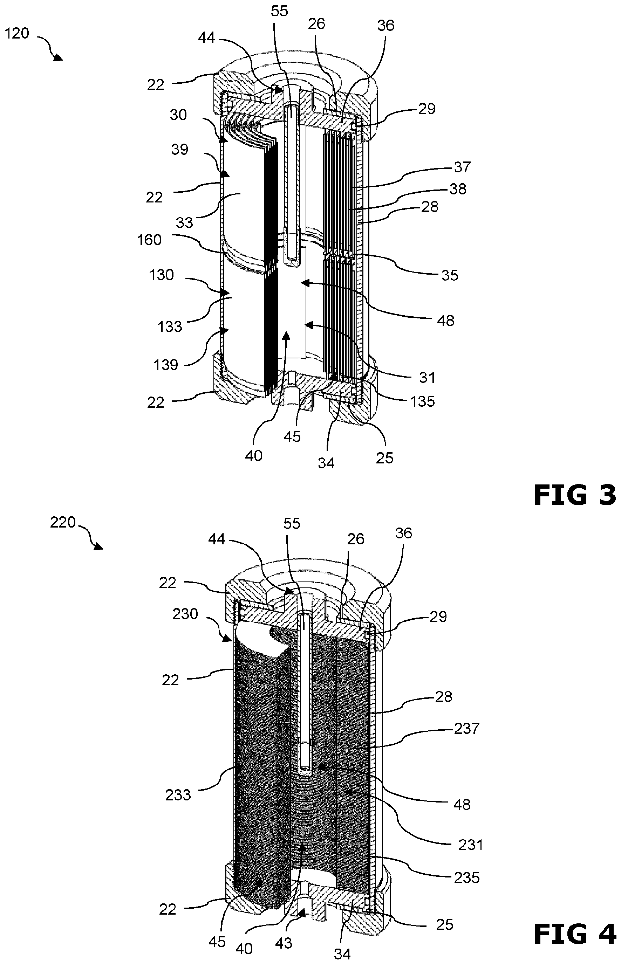

**Figure 3** shows a further embodiment of an inventive gas generator 120. Said gas generator 120 comprises in general the same structural and functional components as the gas generator 20 concerning the **Figure 1 and Figure 2****.** Said gas generator 120 additionally comprises a second electrolytic cell 130, connected in series to the electrolytic cell 30. Said second electrolytic cell 130 is equally constructed as said electrolytic cell 30, wherein said first electrode 133 and said second electrode 135 form a reel 139. An unperforated bipolar contact plate 160 is placed between the electrolytic cell 30 and the second electrolytic cell 130 to reduce leakage currents. A plurality of independent, spring-loaded contact points between the electrodes 33, 35 and 133, 135 provides a good contact quality.

**Figure 4** shows a further embodiment of an inventive gas generator 220. Said gas generator 220 comprises in general the same structural and functional components as the gas generator 20 concerning the **Figure 1 and Figure 2****,** and differs in the structure of the electrodes. Said gas generator 220 comprises an electrolytic cell 230 with a large number of first electrodes 233 and a large number of second electrode 235 connected in series. Said first electrode 233 and said second electrode 235 comprise a disc-shaped structure and form a stack in the hollow cell body 31, where said disc-shaped structure comprises a void 40 in the centre of its structure. For this purpose, unperforated bipolar plates 231 and separator membrane blanks 237 made in this example of polyethersulfone (PES) are stacked alternately. A bipolar plate serves as a first electrode 233 for one cell and as a second electrode 235 for the neighbouring cell. Said gas extraction tube 55 extends in the void 40. Said gas extraction tube 55 is only connected with said second electrode contact 34 and does not contact another part of the electrolytic cell 230, so that the gas extraction tube 55 is mostly exposed in the void 40.

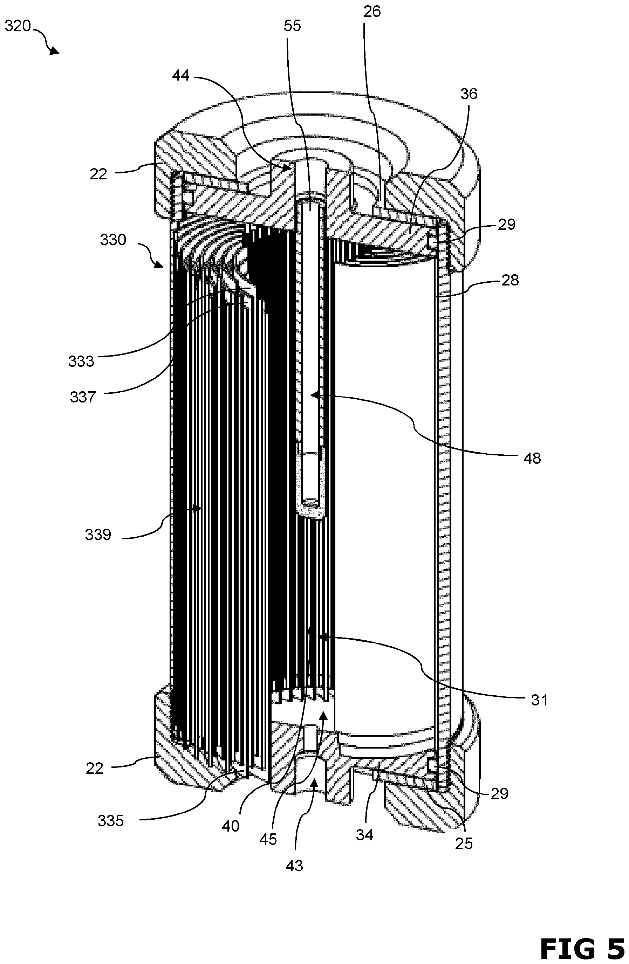

**Figure 5** shows a further embodiment of an inventive gas generator 320. Said gas generator 320 comprises in general the same structural and functional components as the gas generator 20 concerning the **Figure 1 and Figure 2****,** and differs in the structure of the electrodes. Said gas generator 320 comprises an electrolytic cell 330 with a large number of first electrodes 333 and a large number of second electrodes 335 connected in parallel and bent in the shape of a circular involute 339 with a non-conductive separator 337 in between. The electrodes 333, 335 and said separators 337 are each displaced in the axial direction so that the electrodes 333,335 can be contacted with said electrode contacts 34, 36. Said operation gas 48 is led to the void 40 along the circular involute structure 339 of the electrodes 333, 335. Said gas extraction tube 55 extends in the void 40. Said gas extraction tube 55 is only connected with said second electrode contact 34 and does not contact another part of the electrolytic cell 330, so that the gas extraction tube 55 is mostly exposed in the void 40.

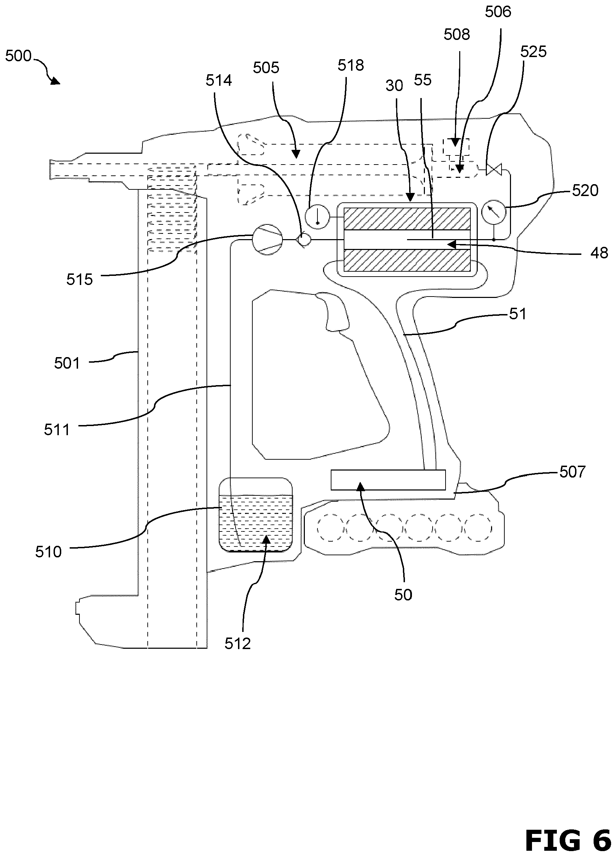

**Figure 6** shows one of the above-described gas generator 20, 120, 220, 320 arranged in a tool 500, especially in a handheld nail-setting tool. Said tool 500 comprises a tool housing 501 with a moveable tooling 505, and one of said gas generator 20, 120, 220, 320 for operating the moveable tooling 505. E.g., said gas generator 20 is arranged at the tool housing 501 and comprises at least one electrolytic cell 30 for generating said oxyhydrogen as operation gas 48. In addition, a temperature measurement device 518 is provided for measuring the temperature on said electrolytic cell 30. Said tool 500 comprises a liquid reservoir 510 for storing water 512. Said liquid reservoir 510 is connected via pipes 511 with a pump 515 for transporting said water 512 into the electrolytic cell 30. Said electrolytic cell comprises KOH as an additive for the water 512. In addition, a check valve 514 is connected in between to avoid backflow. Said electrolytic cell 30 comprises said gas extraction tube 55 as mentioned above. Said gas extraction tube 55 is connected to a gas pressure measurement device 520, which is provided for measuring said gas pressure of the operating gas 48.

Said gas extraction tube 55 is further connected to a dosing valve 525 for dosing said operating gas 48 extending out of the at least one electrolytic cell 30. By controlling a valve opening interval, said amount of operation gas 48 leading into a combustion chamber 506 of the moveable tooling 505 is controlled.

Said tool 500 comprises a power electric circuit 507, which is connected to said energy supplier 50. Said power electric circuit is configured to control an ignition device 508 for ignition of the operation gas 48 in the combustion chamber 506 depending on the operation of said dosing valve and is connected to the pressure measurement device 520 and the temperature measurement device 518.

### Reference List

- 20: gas generator
- 22: housing
- 24: insulation
- 25: insulation disc
- 26: insulation disc
- 28: insulation layer
- 29: gasket
- 30: electrolytic cell
- 31: hollow cell body
- 32: electrode pair
- 33: first electrode of 32
- 34: first electrode contact
- 35: second electrode of 32
- 36: second electrode contact
- 37: separator
- 38: separator
- 39: reel
- 40: void
- 43: refill opening
- 44: opening
- 45: electrolyte
- 48: operation gas
- 50: battery
- 51: wiring
- 55: gas extraction tube

- L: Length of 30

- 120: gas generator
- 130: electrolytic cell
- 133: first electrode of 130
- 135: second electrode of 130
- 139: reel
- 160: contact plate

- 220: gas generator
- 230: electrolytic cell
- 231: bipolar plates
- 233: first electrode of 230
- 235: second electrode of 230
- 237: membrane

- 320: gas generator
- 330: electrolytic cell
- 333: first electrode of 330
- 335: second electrode of 330
- 337: separator
- 339: circular involute

- 500: tool
- 501: tool housing
- 505: tooling
- 506: combustion chamber
- 507: electric power circuit
- 508: ignition device
- 510: reservoir
- 511: pipes
- 512: water
- 514: check valve
- 515: pump
- 518: temperature measurement device
- 520: gas pressure measurement device
- 525: dosing valve

## Claims

1. Gas generator (20; 120; 220; 320) for a tool (500), in particular for a handheld tool, comprising an electrolytic cell (30; 130; 230; 330) with a hollow cell body (31), a first electrode (33; 133; 233; 333) and a second electrode, said first electrode (33; 133; 233; 333) and said second electrode (35; 135; 235; 335) are separated by at least one electrically non-conductive separator (37, 38; 137, 138; 237; 337) in said hollow cell body (31), **characterized in that,** a gas extraction tube (55) is arranged in the hollow cell body (31).

2. Gas generator according to according to claim 1, **characterized in that,** said hollow cell body (31) is at least partially filled with an electrolyte.

3. Gas generator according to claim 1 or 2, **characterized in that,** said gas extraction tube (55) is connected to an opening (43) of said hollow cell body (31), preferably connected to an opening of one of the first electrode contact (34) or of the second electrode contact (36).

4. Gas generator according to one of the previous claims, **characterized in that,** said hollow body (31) comprises a length in at least one dimension and said gas extraction tube (55) extends at least between one third and two thirds of the length of the hollow cell body (31).

5. Gas generator according to one of the previous claims, **characterized in that,** said first electrode (33; 133) and said second electrode (35; 135) are wound up to form a reel inside the hollow cell body (31), and preferably are arranged in the hollow cell body (31) in such a way that they form a void (40) in the centre of the hollow cell body (31).

6. Gas generator according one of the claims 1 to 4, **characterized in that,** said first electrode (233) and said second electrode (233) comprise a disc-shaped structure and form a stack in the hollow cell body (31), where said disc-shaped structure comprises a void (40) in the centre of its structure, or said first electrode (333) and said second electrode (335) comprise an involute structure in the hollow cell body (31), where said involute structure comprises a void (40) in the centre of its structure.

7. Gas generator according to claim 5 or 6, **characterized in that,** said gas extraction tube (55) extends in the void (40) of said reel or said structures.

8. Gas generator according to one of the previous claims, **characterized in that,** said non-conductive separator (37, 38; 137, 138; 237; 337) comprises a porous material, in particular a mesh.

9. Gas generator according to one of the previous claims, **characterized in that,** at least a second electrolytic cell (130), with a first electrode (133) and a second electrode (135) is arranged in said hollow cell body (31), whereby said at least second electrolytic cell (130) is preferably connected in series with said first electrolytic cell (30; 230; 330).

10. Gas generator according to one of the previous claims, **characterized in that,** a hydrophobic filter is arranged at the gas extraction tube (55).

11. Gas generator according to one of the previous claims, **characterized in that,** a housing (22) is provided to assimilate said hollow cell body (31) at least partially and said housing (22) is preferably arrangeable on a tool (500) for providing an interchangeable gas generator.

12. Gas generator according to one of the previous claims, **characterized in that,** said hollow cell body comprises a refill opening (43) for refill an electrolyte into said electrolytic cell (30; 130; 230; 330), and said refill opening (43) is preferable arranged at one of the first electrode contact (34) or second electrode contact (36).

13. Usage of a gas generator (20; 120; 220; 320) according to one of the previous claims in a tool (500), preferably in a handheld tool.

14. Tool (500), preferably a handheld tool, comprising a gas generator (20; 120; 220; 320) according to one of the claims 1 to 12.
